# EUROPEAN PATENT APPLICATION

(11) **EP 2 530 541 A1**
(43) Date of publication of application: **05.12.2012**
(21) Application number: 11168467.6
(22) Date of filing: 01.06.2011
(51) Int. Cl.: G05B 19/418, H04L 12/26

(54) **Supervision of a communication system**

(71) Applicant: ABB Schweiz AG, 5400 Baden (CH)
(72) Inventor: Büchin, Federico, 5400 Baden (CH); Widmer, Theo, 5413 Birmenstorf (CH); Wimmer, Wolfgang, 5323 Rietheim (CH)
(74) Representative: ABB Patent Attorneys

(57) **Abstract**

The present invention is concerned with a stability supervision or monitoring of a communication system of an industrial Process Control (PC) system, by measuring the communication load and comparing the latter to a previously established base load. The measured communication load is represented by a plurality of updated, or present, echo delay measurements for communication paths between a supervising Intelligent Electronic Device IED and end-IEDs of the communication system. The echo delays are established by sending, by the supervising IED, echo poll messages to the end-IEDs, and by receiving an echo from the end-IEDs. If a difference between measured and baseline echo delays exceeds a predetermined threshold, an overload status is signalled to an operator. Hence, a refined dynamic communication network status, beyond a mere binary good/bad indication, is obtained without additional hardware and excessive dedicated communication load.

## Description

### FIELD OF THE INVENTION

The invention relates to Process Control systems, and in particular to Substation Automation systems, with a standardized configuration representation and an Ethernet switch based communication network.

### BACKGROUND OF THE INVENTION

Modern industrial automation and control systems, also termed Process Control (PC) systems in the following, are based on TCP/IP communication between Intelligent Electronic Devices (IEDs) mostly on top of an Ethernet Local Area Network (LAN). PC systems need deterministic response times for real time functions and therefore use Ethernet switch based implementations rather than Ethernet busses. This avoids collisions, and additionally allows configuring priorities and restricting the flow of multicast messages by means of multicast filters and Virtual Local Area Network (VLAN) configuration.

In particular for large Substation Automation (SA) with increased real time critical communication needs due to multicast communication traversing the entire system, the communication network load becomes critical. This is e.g. the case for the Generic Object Oriented Substation Events (GOOSE) and Sampled Value (SV) messages according to IEC 61850. In addition, station level IEDs such as Operator Work Station and gateway, are generally not adapted to handle more than 200 to 1000 messages per second. Notwithstanding the fact that the examples in this specification relate to substations in electrical power transmission and distribution, the principles and methods of the following invention are by no means restricted to a use in substation automation, but likewise applicable to other PC systems with a standardized configuration description. In particular, it has to be noted that IEC 61850 is also an accepted standard for Hydro power plants, Wind power systems, and Distributed Energy Resources (DER).

SA systems typically have a base load on their communication system superposed by time-limited and possibly localized load peaks e.g. due to a temporary file transfer or a bus-bar trip accompanied by message repetitions and message queuing for a few seconds. Nevertheless such a communication system runs stable if a) the base load is a certain percentage below the maximum throughput limit at the bottle necks of the communication system such as connecting cables or switches summing up a lot of traffic, such that there is no message queuing in the switches, and b) the normal load at each individual IED is lower than its handling limit.

Compliance with the abovementioned limits can be checked in a static manner already at engineering or communication system design time. To this end, the communication network load is determined as described e.g. in the patent application EP 2157732 A1 directed to an automatic generation of VLAN configuration data from a logical data flow between the IEDs of a PC system. Formal information about individual messages such as size or sending rate is retrieved from a standardized configuration representation of the system, consolidated or grouped per switch or per connecting cable, and evaluated in order to determine a base network load situation at the latter. The relevant messages are the ones transmitted or forwarded by the switch or cable, the corresponding message sources or control blocks in turn comprising the VLAN IDs assigned to the (ports of the) switch under consideration, or to a port of a switch to which the cable is connected, respectively. Furthermore, for event-based reports, the formal information retrieved preferably comprises a general data change rate indicative of a normal state data flow as well as a burst size indicative of a maximum peak load. Hence, for every switch and/or connecting cable, the base and expected peak network load can be calculated in advance based on a prediction of the messages received under various circumstances.

However, in addition to the expected load peaks or burst situations mentioned, unexpected incidences that have an adverse effect on the communication system stability without instantaneously blocking it may occur. In these cases, the aforementioned limits may not be respected for a longer period of time that exceeds the duration of the expected peak loads. Such incidences include disturbances or errors that are commissioning related and can be detected at commissioning time, such as
- Non-fatal permanent hardware problems such as optical cable bending, leading to an excessive and intermittent number of message repetitions, and
- Missing or wrong configuration of switches leading to an increased load due to circulating or excessive number of multicast messages.

Other disturbances or errors can only be detected during operation by some online supervision of the system, such as
- Non-fatal sporadic hardware problems such as defect ports leading to an excessive number of erroneous messages spontaneously sent, and
- Denial of service (DOS) attack overloads some IEDs or a part of the communication system.

Supervision of IEDs in conventional PC systems is of binary nature and aims at determining whether an individual IED can be reached and is still communicating. Different ways have been devised to detect hardware problems or load problems that are severe enough to block the system.

A commissioned PC system, especially an SA system with safety related or protection related functions relying on communication, needs to be checked for system stability. The fault tolerant nature of protocols like TCP has the potential to hide any temporary errors, such that the PC system might functionality wise work fine upon commissioning and yet comprise hidden faults leading to higher load as expected or slowly increasing load and therefore to forthcoming system instability. Hence, there is a certain interest to detect problems caused by increasing load or system instability before any function in the system is completely blocked, to distinguish load problems from real HW problems, and to identify the location where such load problems appear. One possibility is to permanently measure the stream of messages at each switch port or at each connecting cable, respectively. This would either necessitate extensive additional measuring hardware in turn introducing additional communication load, or some additional features in the switches and especially some evaluation logic of the switch supplied data. Although message counters often exist at the switches for the individual ports, this still would need to be synchronized to the current point in time and need special evaluation to relate them to each other and to the normal situation.

Dedicated remote tripping devices or teleprotection devices are generally used for transmitting protection or switching commands for distance and differential protection schemes between substations in electrical high-voltage and medium-voltage networks and systems. Conventionally, teleprotection systems monitor the state and delay of a communication system by means of dedicated loop test messages that operate as follows: two stations, A and B, are connected via a communication link. Station A transmits a special message to station B, which receives the message and immediately sends back an "echo" to station A. When station A receives this "echo", it knows that the communication link is working, and it can also measure the transmission delay (half the time it takes the loop test message to travel from A to B and back to A). A loop test message is typically sent once every few hours, accordingly, changes of the transmission delay in real-time are not detected.

### DESCRIPTION OF THE INVENTION

It is therefore an objective of the invention to increase availability of an industrial automation and control system. This objective is achieved by a method of supervising a communication system and a device according to the independent claims. Preferred embodiments are evident from the dependent patent claims, wherein the claim dependency shall not be construed as excluding further meaningful claim combinations.

According to the invention, a stability of a communication system of an industrial Process Control (PC) system is supervised, or monitored, by measuring the communication load and comparing the latter to a previously established base load. The measured communication load is represented by a plurality of updated, or present, echo delay measurements for communication paths between a supervising Intelligent Electronic Device IED and end-IEDs of the communication system. The echo delays are established by sending, by the supervising IED, echo poll messages to the end-IEDs, and by receiving an echo from the end-IEDs. If a difference between measured and baseline echo delays exceeds a predetermined threshold, an overload status is signalled to an operator. Hence, a refined dynamic communication network status, beyond a mere binary good/bad indication, is obtained without additional hardware and excessive dedicated communication load.

In an advantageous embodiment of the invention, a baseline echo-delay for a communication state without message queuing is calculated according to a communication path as retrieved or derived from a formal configuration representation of the PC system.

In a preferred variant of the invention, a subsequent echo delay is measured after a time span characteristic of an expected burst or non-permanent overload situation in order to exclude the latter as origin of the overload situation. A difference between subsequent and baseline echo delay is then calculated. If both the difference between measured and baseline echo delay as well as the difference between subsequent and baseline echo delay exceed the threshold, the presence of an unexpected error or a permanent overload situation is inferred.

The invention supports detection, already at commissioning, of hidden faults e.g. due to missing or wrong switch configurations, wrongly estimated background load etc, which conventionally are noticed only some weeks or even months later and require man weeks of diagnosis effort. Specifically, by using the delay-supervision method over a certain time span, such non-mortal faults can be detected and remedied before causing a function break down in an emergency burst situation.

The present invention also relates to a computer program product including computer program code for controlling one or more processors of an IED adapted to be connected to a communication network of the PC system, and configured to store a standardized configuration representation of the PC system, particularly, a computer program product including a computer readable medium containing therein the computer program code.

### BRIEF DESCRIPTION OF THE DRAWING

The subject matter of the invention will be explained in more detail in the following text with reference to preferred exemplary embodiments which are illustrated in the attached drawing

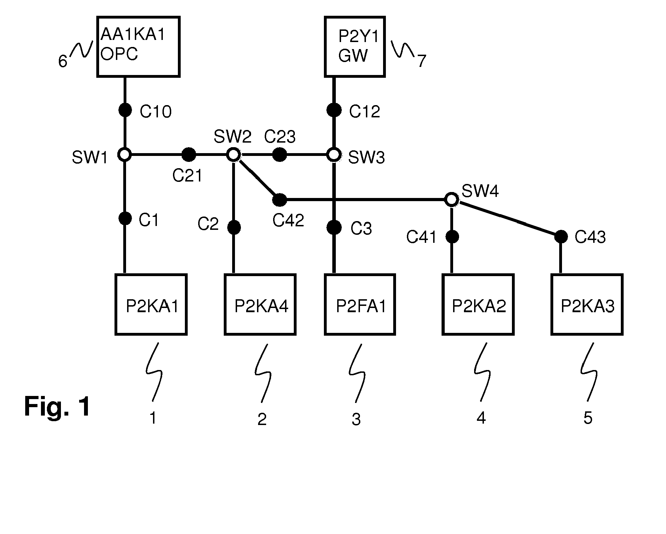

Fig. 1 schematically depicting the physical network structure of a communication network of an exemplary Substation Automation (SA) system.

### DETAILED DESCRIPTION OF PREFERRED EMBODIMENTS

Fig.1 depicts the physical network structure of a communication network of an exemplary Substation Automation (SA) system, i.e. a configured communication or logical data flow between Intelligent Electronic Devices (IEDs) with switches (open circles), cables (dots), and IEDs (rectangles). The switches SW1, SW2, SW3, SW4 are connected to the IEDs with cables C1, C2, C3, C41, C43, C10, C12, and among themselves with trunk cables C21, C23, C42. For the purpose of the following description, IED 1 is assigned the role of supervising IED, while each of the other IEDs 2 -7 is considered an end-IED. Optionally and where appropriate, the switches may likewise be considered end-IEDs in the following.

An unstable state of the communication system is detected by systematically evaluating the results of an echo function from the central supervising IED to end-IEDs in the system. The supervising IED is preferably an existing station level IED, or a separate IED non-permanently connected to the communication system, e.g. at commissioning time. Between the supervising IED and each of the end-IEDs a communication path is identified and assigned a corresponding echo delay. For each path, the evaluation of the echo delay time is done according to the following criteria.

At the onset, the base load of the communication system is estimated by measuring a baseline average echo delay and a baseline maximum echo delay for each path. Baseline average and maximum echo delay are determined in a straightforward way from a limited number, e.g. 4 to 10, of initial delay measurements, e.g. via ICMP Ping function for echoing, performed within a short measurement time interval. Considering both average and maximum delay allows detecting expected load peaks or burst situations that occur within the measurement time interval. For the measured baseline echo delays, the details of the communication paths in excess of the IP address of the end-IED are not needed.

Echo delay measurements are typically repeated at intervals exceeding the duration of a regular burst or file transfer, i.e. at intervals of 10 to 100 s. For any subsequent measurement of average and maximum echo delay, a notable increase against the baseline delays by a pre-determined and adaptable delta (e.g. 10% of the measured maximum, but at least 2 ms) indicates an overload situation. If the overload situation persists for two consecutive delay measurements, the overload situation is concluded to be of unexpected nature, i.e. not due to a regular burst or file transfer. An underlying problem in the communication system, e.g. DOS attack, HW error of some port, or wrongly estimated base load, therefore needs to be addressed. If the delays even continue to grow from one delay measurement to the next delay measurement, the origin of the problem may reside in a wrongly configured switch resulting in infinitely circulating messages.

As an alternative to the measured baseline delay, the latter may be calculated as the expected typical delay without message queuing in the switches. From the system configuration description, for each communication path the bit rate of each inter-switch hop as well as the number of switches including the, albeit negligible, intra-switch delay or residence time are known. In addition, the echo application delay at the end-IED under normal load is either known or can be easily measured. Thus the typical delay of the echo message without any queuing in the switches can be calculated in advance. For instance, an exemplary hop delay for each hop of a 1 kB echo message amounts to 1 kB / 100 MB/s = 100 µs, while the switch residence time is typically < 20 µs. If a measured echo delay exceeds this calculated delay time, either the application IED sending the echo is overloaded, or somewhere on this path message queuing has started, indicating a burst, a temporary overload or an unstable situation. Again, if such message queuing persists for an extended time, the system is concluded to be in an unstable state.

In case of SA systems described by some formal method like IEC 61850 SCD files, the previously engineered structure of the communication system can be imported into an analysis tool or into the supervising IED. Alternatively, the known communication system structure can be manually entered by means of an editor. Based on the communication system structure, the aforementioned typical delay before queuing is calculated by a supervision application. Alternatively, if the maximum number of switches per path and the cable bit rates are known, the typical delay can be calculated by other means and retained as manual configuration data per supervised end-IED.

By superposing or overlaying partly overlapping communication paths that share, according to the communication system structure, a number of network elements (cables, switches), faulty and healthy elements may be identified. Healthy path measurements prevail over erroneous elements in the paths, i.e. all network elements that are part of at least one healthy path are considered healthy. A suitable graphical overview can be generated, indicating if only parts of the system are overloaded, or if the whole system is concerned. For instance, in Fig.1, if the communication path from supervising IED 1 to end-IED 3 is ok whereas the path from supervising IED 1 to end-IED 7 is not, it is concluded that the error is localized at IED 7, along cable C12, or at the ports of switch SW3 or end-IED 7 to which the cable C12 is connected. In case of faults or attacks leading to a high amount of messages in the system, the end-IED(s) concerned can be identified and graphically visualized. Specifically, in case only the last hop to the end-IED 7 is overloaded, the message input to this IED is concluded excessive and attributed to an attack or to a system design/configuration fault. Naturally also IEDs not reachable any longer by the echo message are identified, thus providing part of the conventional IED supervision application.

This overlay of path information allows diagnosing unstable system parts even if the echo is only done with the end-IEDs. Nevertheless, by including the switches into this procedure, an even more detailed picture can be obtained.

As the echo message exchange is repeated only a small number of times (i.e. between 4 and 10 times) at each measurement of average / maximum delay, and as a subsequent measurement is done only after an extended time span of e.g. one minute, the additional load to an Ethernet communication system can be neglected. In order to prevent, following too frequent Ping requests, an automatic shut-down of the Ping application or an artificial response delay at the end-IEDs, the abovementioned number of 4 to 10 individual measurement within the short measurement time interval should be fully configurable. Using a common echoing function like Ping allows using it with nearly any IED having an IP based communication protocol. For other IEDs a special echoing function can be implemented, e.g. a Bit-Toggle-Application with echo functionality via GOOSE or even via IEC 61850 MMS.

The setup or configuration of the supervision application can be automated if a formal system configuration description such as an IEC 61850 SCD file is available, the latter including IP addresses of the end-IEDs as well as details of the physical communication paths such as Ethernet switches and cable bit rates. The supervision application provides for an easy to use communication stability check, which due to repeated measurements and comparison of measurements across time also detects later instability situations caused by wrong communication system configurations or sudden system incidents as described before.

## Claims

1. A method of supervising a communication system of a Process Control PC system, and in particular of a Substation Automation SA system, with a plurality of Intelligent Electronic Devices IEDs connected to switches of an Ethernet switch-based communication network, comprising
- determining a baseline echo delay between a supervising IED (1) and an end-IED (7),
- measuring an echo delay between the supervising IED (1) and the end-IED (7),
- calculating a difference between measured and baseline echo delay, and
- concluding, if the difference exceeds a predetermined threshold, on a communication overload situation.

2. The method according to claim 1, comprising
- retrieving, for each end-IED, from a formal configuration representation of the PC system comprising a logical data flow definition, a communication path between the supervising IED (1) and the end-IED (7), and
- calculating the baseline echo delay based on the communication path.

3. The method according to claim 1, comprising
- determining and measuring both an average and a maximum echo delay.

4. The method according to one of claims 1 to 3, comprising
- measuring a subsequent echo delay,
- calculating a difference between subsequent and baseline echo delay, and
- concluding, if both the difference between measured and baseline echo delay as well as the difference between subsequent and baseline echo delay exceed the threshold, on an unexpected error.

5. The method according to claim 4, comprising
- evaluating, in case of an unexpected error, measured echo delays from two partly overlapping communication paths to identify or exclude a problem location.

6. An Intelligent Electronic Device IED (1) adapted to be connected to a communication network of a Process Control PC system, and in particular of a Substation Automation SA system, with a plurality of Intelligent Electronic Devices IEDs connected to an Ethernet switch-based communication network, configured to execute the method according to one claims 1 to 5.
